(19) Europäisches Patentamt
European Patent Office
Office européen des brevets

(11) **EP 2 713 540 A1**

(12) **EUROPEAN PATENT APPLICATION**
published in accordance with Art. 153(4) EPC

(43) Date of publication:
**02.04.2014 Bulletin 2014/14**

(51) Int Cl.:
**H04L 1/06** (2006.01)

(21) Application number: **12807284.0**

(86) International application number:
**PCT/CN2012/078350**

(22) Date of filing: **09.07.2012**

(87) International publication number:
**WO 2013/004198 (10.01.2013 Gazette 2013/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.07.2011 CN 201110189916**

(71) Applicant: **Huawei Technologies Co., Ltd
Shenzhen, Guangdong 518129 (CN)**

(72) Inventors:
• **XIA, Liang
Shenzhen
Guangdong 518129 (CN)**

• **ZHOU, Yongxing
Shenzhen
Guangdong 518129 (CN)**
• **REN, Xiaotao
Shenzhen
Guangdong 518129 (CN)**

(74) Representative: **Pfenning, Meinig & Partner GbR
Patent- und Rechtsanwälte
Theresienhöhe 13
80339 München (DE)**

(54) **CHANNEL INFORMATION FEEDBACK METHOD, TERMINAL AND BASE STATION**

(57) Embodiments of the present invention disclose a method, terminal, and base station for feeding back channel information. The method includes: determining that channel information between access points needs to be fed back; and sending feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station. In the embodiments of the present invention, feedback of channel adjustment information between a reference access point and a non-reference access point is implemented.

Determine that channel information between access points needs to be fed back — 11

Send feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station — 12

FIG. 1

## Description

This application claims priority to Chinese Patent Application No. 201110189916.2, filed with the Chinese Patent Office on July 7, 2011, and entitled "METHOD, TERMINAL, AND BASE STATION FOR FEEDING BACK CHANNEL INFORMATION", which is incorporated herein by reference in its entirety.

## TECHNICAL FIELD

Embodiments of the present invention relate to the field of communications technologies, and in particular, to a method, terminal, and base station for feeding back channel information.

## BACKGROUND

In a communication system, a multi-point transmission technology such as a coordinated multi-point transmission/reception (Coordinated Multiple Point transmission and reception, CoMP for short) technology may be adopted, so as to obtain a relatively high user throughput rate. In the CoMP technology, multiple access points (Access Point, AP for short) having a multi-antenna function provide a data transmission service for one or more user equipments (User Equipment, UE for short) on a same time-frequency resource. For the CoMP technology, a base station needs to use channel state information between a terminal and a candidate access point set as an input variable or a reference variable to complete processes of signal sending such as precoding at a sending end and downlink resource scheduling such as multi-user matching; and therefore, accurate feedback of downlink channel state information has great significance.

Channel state information may be classified into channel space state information and channel quality information. The channel space state information is, for example, a precoding matrix indicator (Precoding Matrix Indicator, PMI for short), and the channel quality information is, for example, a channel quality indicator (Channel Quality Indicator, CQI for short). In the prior art, a method for feeding back channel space state information of a single access point is, for example, selecting, by a UE, an optimal code word from a defined codebook, and feeding back a PMI of the code word in the codebook; and obtaining, by a base station, a channel covariance matrix of a downlink channel by using reciprocity between uplink and downlink channels, which specifically is that the base station may obtain the channel covariance matrix of the downlink channel by measuring an uplink sounding reference signal (Sounding Reference Signal, SRS for short), and calculate downlink channel state information according to the PMI fed back by the UE.

In a joint processing (Joint Processing, JP for short) multi-point transmission system, multiple access points provide a data transmission service for a UE on a same time-frequency resource. When data signals sent by different access points arrive at a same UE, the quality of the data signals may be enhanced or weakened. Therefore, the multiple access points need to jointly process data signals to be sent, for example, need to weight the data signals to be sent and map them to different antennas of different access points. In order to perform joint processing on the data signals to be sent, an access point not only needs to consider channel space state information of a single access point, but also needs to consider channel information between different access points, so that the quality of the data signals that arrive at the UE from the multiple access points is optimized. The channel space state information of the single access point, for example, information such as a PMI and/or a channel quality indicator (Channel Quality Indicator, CQI for short) of the single access point may be fed back by adopting the foregoing existing technology; however, for the channel information between different access points, a corresponding feedback mechanism is still absent currently.

## SUMMARY

Embodiments of the present invention provide a method, terminal, and base station for feeding back channel information, so as to implement feedback of channel adjustment information between a reference access point and a non-reference access point.

An embodiment of the present invention provides a method for feeding back channel information, which includes:

determining that channel information between access points needs to be fed back; and
sending feedback content to a base station on a resource configured by the base station, where
the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station.

An embodiment of the present invention further provides a method for feeding back channel information, which includes:

sending multi-access point feedback configuration signaling to a terminal; and

receiving, on a configured resource, feedback content that is sent by the terminal according to the multi-access point feedback configuration signaling, where the feedback content includes at least: channel adjustment information between a reference access point and a non-reference access point; and the configured resource includes: a configured dedicated resource used to feed back the channel adjustment information, or all or a part of configured resources used for periodic feedback, or all or a part of configured resources used for aperiodic feedback.

An embodiment of the present invention further provides a terminal, which includes:

a feedback determining module, configured to determine that channel information between access points needs to be fed back; and

a feedback module, configured to send, according to a determination result of the feedback determining module, feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station.

An embodiment of the present invention further provides a base station, which includes:

a feedback instruction sending module, configured to send multi-access point feedback configuration signaling to a terminal; and

a feedback content receiving module, configured to receive, on a configured resource, feedback content that is sent by the terminal according to the multi-access point feedback configuration signaling sent by the feedback instruction sending module, where the feedback content includes at least: channel adjustment information between a reference access point and a non-reference access point; and the configured resource includes: a configured dedicated resource used to feed back the channel adjustment information, or all or a part of configured resources used for periodic feedback, or all or a part of configured resources used for aperiodic feedback.

According to the method, terminal, and base station for feeding back channel information provided in the embodiments of the present invention, when determining that channel information between cells needs to be fed back, a terminal can feed back channel adjustment information between a reference access point and a non-reference access point to a base station, so as to provide a solution for feeding back channel information between access points.

**BRIEF DESCRIPTION OF DRAWINGS**

To describe the technical solutions in the embodiments of the present invention or in the prior art more clearly, the following briefly introduces the accompanying drawings required for describing the embodiments or in prior art. Apparently, the accompanying drawings in the following description show merely some embodiments of the present invention, and persons of ordinary skill in the art may still derive other drawings from these accompanying drawings without creative efforts.

FIG. 1 is a flow chart of a method for feeding back channel information according to a first embodiment of the present invention;

FIG. 2 is a flow chart of a method for feeding back channel information according to a second embodiment of the present invention;

FIG. 3 is a schematic structural diagram of a coordinated multi-point transmission/reception system in an application scenario according to an embodiment of the present invention;

FIG. 4 is a flow chart of a method for feeding back channel information according to a third embodiment of the present invention;

FIG. 5 is a schematic structural diagram of a terminal according to a fourth embodiment of the present invention;

FIG. 6 is a schematic structural diagram of a base station according to a fifth embodiment of the present invention; and

FIG. 7 is a schematic structural diagram of a communication system according to a sixth embodiment of the present invention.

## DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the embodiments to be described are merely a part rather than all of the embodiments of the present invention. All other embodiments obtained by persons of ordinary skill in the art based on the embodiments of the present invention without creative efforts shall fall within the protection scope of the present invention.

Sequence numbers of the following embodiments of the present invention are merely for description and do not represent superiority or inferiority of the embodiments.

In the embodiments of the present invention, a terminal may also be called a user equipment (User Equipment, UE for short), a mobile station (Mobile Station, MS for short), a mobile terminal (Mobile Terminal), and the like. The terminal device may communicate with one or more core networks through a radio access network (Radio Access Network, RAN for short). For example, the terminal device may be a mobile phone (or called a "cellular" phone), a computer having a mobile terminal, and the like, and for example, the terminal may also be a portable, pocket-sized, handheld, computer built-in, or vehicle-mounted mobile apparatus, which exchanges language and/or data with the radio access network.

In the embodiments of the present invention, a base station may be a base transceiver station (Base Transceiver Station, BTS for short) in a global system for mobile communications (Global System for Mobile Communications, GSM for short) or a code division multiple access (Code Division Multiple Access, CDMA for short) mobile communication system, may also be a nodeB (NodeB, NB for short) in a wideband code division multiple access (Wideband Code Division Multiple Access, WCDMA for short) mobile communication system, and may also be an evolved node B (Evolutional Node B, eNB or e-NodeB for short) in long term evolution (Long Term Evolution, LTE for short), a relay (Relay), or the like.

The base station and the user equipment are not limited in the embodiments of the present invention; however, for ease of description, an eNB and a UE are used as an example for description in the following embodiments. However, it should be understood that, the embodiments of the present invention are not limited thereto, for example, a method and an apparatus in the embodiments of the present invention are applicable to a subsequent version of the LTE.

In the embodiments of the present invention, access points that need to be fed back by a user equipment may be classified into a reference access point and a non-reference access point. A reference access point may be a serving cell or a serving node, for example, a cell or a node for a user to receive a physical layer broadcast channel, or a reference access point may also be, for example, a cell or a node that is designated by a base station; and except the reference access point, an access point that needs to be fed back is a non-reference access point, and the non-reference access point may be a coordinated cell or a coordinated node.

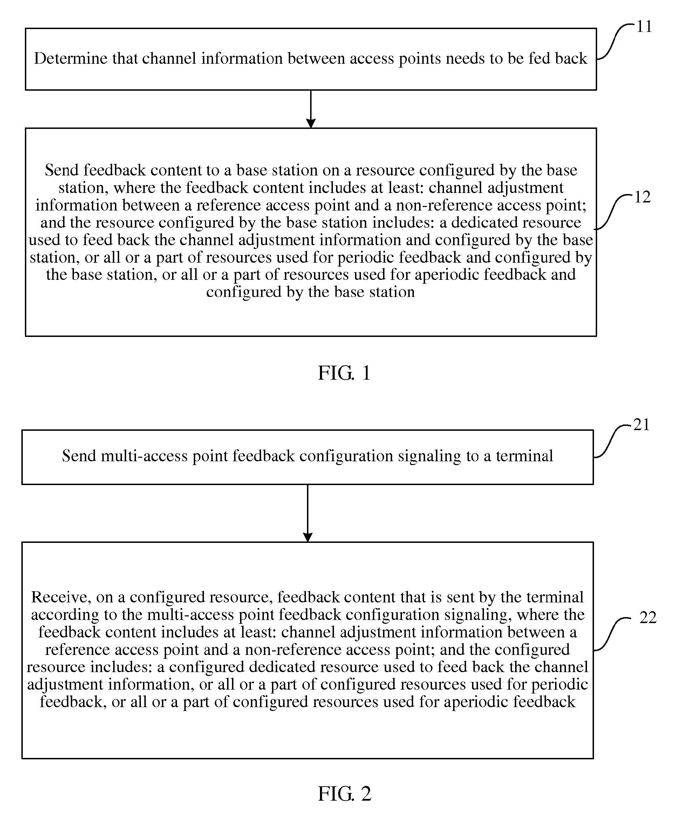

FIG. 1 is a flow chart of a method for feeding back channel information according to a first embodiment of the present invention. In this embodiment, the method for feeding back channel information is described from a terminal side, that is, an executor of this embodiment is a terminal such as a UE. Specifically, as shown in FIG. 1, the method for feeding back channel information provided in this embodiment includes:

Step 11: Determine that channel information between access points needs to be fed back.

The terminal may determine, in different manners, whether the channel information between the access points needs to be fed back to a base station.

Optionally, the terminal may determine, according to signaling sent by a base station, whether the channel information between the access points needs to be fed back to the base station. For example, the terminal may determine, when receiving multi-access point feedback configuration signaling sent by the base station, that the channel information between the access points needs to be fed back. The configuration signaling may be high layer signaling or dynamic signaling used to indicate whether multi-access point feedback needs to be performed. If the configuration signaling is high layer signaling, the terminal includes the channel information between the access points in feedback content in a continuous period of time according to the high layer signaling until the high layer signaling changes, or if the configuration signaling is dynamic signaling, the terminal feeds back, according to the dynamic signaling, the channel information between the access points at a moment of receiving the dynamic signaling or at one or more pre-specified moments after a moment of receiving the dynamic signaling.

Alternatively, the terminal may determine, according to a current downlink data transmission mode, whether the channel information between the access points needs to be fed back to the base station. For example, the terminal may determine, when the current downlink data transmission mode is a CoMP mode or a CoMP joint transmission (Joint Transmission, JT for short) mode, that the channel information between the access points needs to be fed back. The current downlink data transmission mode of the terminal may be notified by the base station to the terminal through signaling, or may be determined by the terminal according to the number of coordinated access points configured by the base station for the terminal, that is, when the number of coordinated access points is greater than zero, the current downlink data transmission mode of the terminal is a CoMP mode or a CoMP joint transmission mode.

The channel information between the access points that needs to be fed back by the terminal to the base station may include: channel adjustment information between a reference access point and a non-reference access point. The channel adjustment information between the reference access point and the non-reference access point may include: phase adjustment information between the reference access point and the non-reference access point, and/or amplitude adjustment information between the reference access point and the non-reference access point.

Step 12: Send feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station.

Before sending the channel adjustment information to the base station, the terminal may adopt a codebook of M ($M \geq 1$) bits to perform quantization processing on the channel adjustment information, and then, the terminal bears, on a feedback channel, the channel adjustment information on which the quantization processing has been performed, and sends it to the base station.

For example, the codebook, based on which the terminal performs the quantization processing on the channel adjustment information to be sent, may include one or more of the following constellation diagrams: a binary phase shift keying (Binary Phase Shift Keying, BPSK for short) constellation diagram of M=1 bit, a quadrature phase shift keying (Quadrature Phase Shift Keying, QPSK for short) constellation diagram of M=2 bits, an 8 phase shift keying (8 Phase Shift Keying, 8PSK for short) constellation diagram of M=3 bits, and a 16 quadrature amplitude modulation (16 Quadrature Amplitude Modulation, 16QAM for short) constellation diagram of M=4 bits.

The codebook, based on which the quantization processing is performed on the channel adjustment information may be predetermined, or may be, for example, indicated by the base station to the terminal through signaling. An advantage is that quantization precision of the channel adjustment information may be adjusted according to a requirement of the terminal or the base station.

According to the method for feeding back channel information provided in this embodiment, when determining that channel information between cells needs to be fed back, a terminal can feed back channel adjustment information between a reference access point and a non-reference access point to a base station, so as to provide a solution for feeding back channel information between access points.

FIG. 2 is a flow chart of a method for feeding back channel information according to a second embodiment of the present invention. In this embodiment, the method for feeding back channel information is described from a base station, that is, an executor of this embodiment is a base station. Specifically, as shown in FIG. 2, the method for feeding back channel information provided in this embodiment includes:

Step 21: Send multi-access point feedback configuration signaling to a terminal.

Step 22: Receive, on a configured resource, feedback content that is sent by the terminal according to the multi-access point feedback configuration signaling, where the feedback content includes at least: channel adjustment information between a reference access point and a non-reference access point; and the configured resource includes: a configured dedicated resource used to feed back the channel adjustment information, or all or a part of configured resources used for periodic feedback, or all or a part of configured resources used for aperiodic feedback.

In the foregoing technical solution, optionally, before the base station receives the feedback content sent by the terminal, the base station may further send, to the terminal, signaling used to indicate a subband that needs to feed back the channel adjustment information. An optional signaling indicating method includes: sending high layer signaling to the terminal for indicating one or more subband groups, so that the terminal determines, according to a preset rule, a subband group that needs to feed back the channel adjustment information from the one or more subband groups, and determines the subband that needs to feed back the channel adjustment information and is indicated by the base station from the determined subband group, or sending high layer signaling to the terminal for indicating multiple subband groups, and sending dynamic signaling to the terminal for indicating a subband group that needs to feed back the channel adjustment information among the multiple subband groups, and determining the subband that needs to feed back the channel adjustment information and is indicated by the base station from a determined subband group.

One subband group may be indicated by using one piece of high layer signaling, and one piece of high layer signaling is used to indicate one or more subbands in one subband group. The foregoing high layer signaling may perform indicating by adopting a bitmap coding indicating method, or perform indicating by adopting a method of indicating an initial position of a subband. Each bitmap coding bit corresponds to S subbands, where S is an integer greater than or equal to 1. When a certain bitmap coding bit is "1", S subbands corresponding to the bit need to feed back the channel adjustment information, and correspondence between each bit and S subbands may be predetermined. A specific method for determining a subband that needs to feed back the channel adjustment information and is indicated by the base station from the determined subband group may include: determining one or more subbands of which the channel quality is best among one or more subbands in the determined subband group as the subband that needs to feed back the channel adjustment information, or sending dynamic signaling to the terminal for indicating the subband that needs to feed back the channel adjustment information in the determined subband group. Optionally, the base station sends N (N>1) pieces of high layer signaling to the terminal for indicating N subband groups, where each subband group includes one or more subbands, so that the terminal determines, according to a preset rule, a subband group that needs to feed back the channel adjustment information among the N subband groups, where the preset rule may include a preset order of the N subband groups.

Optionally, if the terminal adopts a codebook of M (M≥1) bits to perform quantization processing on the sent channel adjustment information, the base station may adopt the same codebook as that used by the terminal to perform inverse quantization processing on received data sent by a UE, so as to obtain the channel adjustment information.

The codebook for performing inverse quantization processing on the channel adjustment information may include one or more of the following constellation diagrams: a BPSK constellation diagram of M=1 bit, a QPSK constellation diagram of M=2 bits, an 8PSK constellation diagram of M=3 bits, and a 16QAM constellation diagram of M=4 bits.

The codebook, based on which the quantization processing or the inverse quantization processing is performed on the channel adjustment information may be predetermined, or may be also, for example, indicated by the base station to the terminal through signaling.

According to the method for feeding back channel information provided in this embodiment, a base station can trigger, through signaling, a terminal to feed back channel adjustment information between a reference access point and a non-reference access point, so as to provide a solution for feeding back channel information between access points.

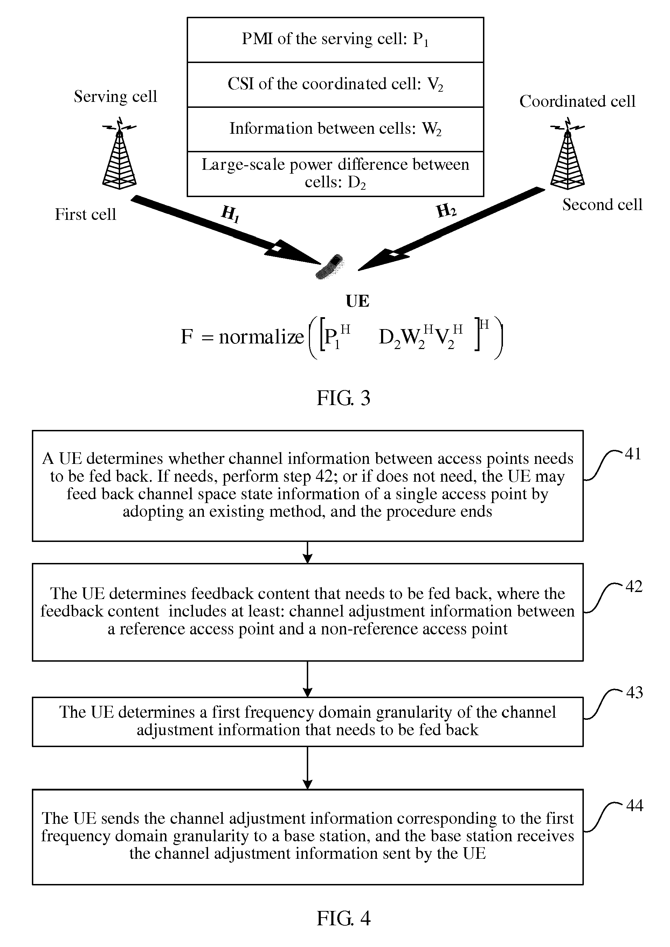

FIG. 3 is a schematic structural diagram of a coordinated multi-point transmission/reception system in an application scenario according to an embodiment of the present invention. In the system shown in FIG. 3, a reference access point is a serving cell (Serving Cell) or a primary cell (Primary Cell) of a UE; a non-reference access point is a coordinated cell (Coordinated Cell) or a secondary cell (Secondary Cell) of the UE; and H1 represents a downlink channel from the reference access point to the UE, and H2 represents a downlink channel from the non-reference access point to the UE. A base station may determine, according to channel information fed back by the UE and according to reciprocity between uplink and downlink channels, a channel covariance matrix for reflecting downlink channel state information.

For a multi-access point feedback application scenario shown in FIG. 3, the UE may separately or simultaneously feed back their respective PMI or CQI of multiple access points, and a feedback mode, a downlink data transmission mode, and a specific feedback parameter corresponding to the feedback mode of each access point is independently configured.

Channel information that the base station needs to learn may include: a PMI (P1) of the reference access point, a CSI (V2) of the non-reference access point, channel adjustment information (W2) between the reference access point and the non-reference access point, and a large-scale power difference (D2) between cells. D2 may be obtained through a parameter such as RSRP included in a measurement report sent by the UE; P1 is channel space state information of the reference access point; V2 is channel space state information of the non-reference access point; and W2 is the channel adjustment information between the reference access point and the non-reference access point. P1 and W2 need to be fed back by the UE to the base station. The UE selects W2 from a codebook and performs quantization processing on W2 by adopting the codebook, and then feeds back W2 to the base station. V2 may be quantized by the UE into a PMI and fed back to the base station, or is obtained by the base station according to reciprocity between uplink and downlink channels. After obtaining P1, V2, W2, and D2, the base station may construct, by adopting the following formula, a vector F capable of representing jointed channel information of multiple access points:

$$ F = \text{normalize}\left( \left[ P_1^H D_2 W_2^H V_2^H \right]^H \right). $$

In the foregoing formula, "normalize" is a normalization function, the symbol "H" involved in the foregoing formula represents a conjugate of a corresponding parameter, and elements of the vector F correspond to weights jointly sent by antennas. The base station may make a reference to the vector F to process a signal to be sent by each antenna, so as to enhance or cancel signals of multiple antennas that arrive at the UE.

A method for the UE to feed back P1, V2, and W2 to the base station in the embodiment of the present invention is described in detail in the following by using the system shown in FIG. 3 as an application scenario with reference to FIG. 4.

FIG. 4 is a flow chart of a method for feeding back channel information according to a third embodiment of the present invention. As shown in FIG. 4, the method includes:

Step 41: A UE determines whether channel information between access points needs to be fed back. If needs, perform step 42; or if does not need, the UE may feed back channel space state information of a single access point by adopting an existing method, and the procedure ends.

Corresponding to the system shown in FIG. 3, the channel information between the access points is channel adjustment information W2 between a reference access point and a non-reference access point, and may include phase adjustment information between the reference access point and the non-reference access point and/or amplitude adjustment information between the reference access point and the non-reference access point.

Channel space state information of a single cell may include channel space state information of the reference access point and/or channel space state information of the non-reference access point. In the system shown in FIG. 3, the channel space state information of the reference access point is a PMI (P1) of the reference access point, and the channel space state information of the non-reference access point is a CSI (V2) of the non-reference access point.

(1) Optionally, the UE may determine, according to configuration signaling sent by a base station, whether the channel information between the access points needs to be fed back.

For example, the UE may determine, when receiving multi-access point feedback configuration signaling sent by the base station, that the channel information between the access points needs to be fed back.

(2) Optionally, a terminal may determine, according to a current downlink data transmission mode, whether the channel information between the access points needs to be fed back.

For example, the UE may determine, when the current downlink data transmission mode is a CoMP mode or a CoMP joint transmission mode, that the channel information between the access points needs to be fed back.

Step 42: The UE determines feedback content that needs to be fed back, where the feedback content includes at least: channel adjustment information between a reference access point and a non-reference access point.

Optionally, the feedback content may further include channel space state information of the reference access point, where the channel space state information of the reference access point may specifically be a PMI of the reference access point. An advantage of such processing is that: When the base station determines that the UE needs to be adjusted from a multi-access point joint transmission mode to a single-access point transmission mode, because the base station obtains the channel space state information of the reference access point, the base station may process, according to the channel space state information of the reference access point, data to be sent to the UE, so that communication of the UE is not affected.

Optionally, the feedback content may further include channel space state information of the non-reference access point, where the channel space state information of the non-reference access point may specifically be a PMI of the non-reference access point. Specifically, the UE may feed back the PMI of the non-reference access point to the base station. When receiving the PMI of the non-reference access point, the base station uses the received PMI of the non-reference access point as a CSI of the non-reference access point, so that the UE may further feed back the channel space state information of the reference access point and/or the channel space state information of the non-reference access point to the base station at the same time of feeding back the channel adjustment information, so as to improve feedback efficiency. Optionally, the feedback content may further include a CQI of the non-reference access point.

Step 43: The UE determines a first frequency domain granularity of the channel adjustment information that needs to be fed back.

The first frequency domain granularity may include a predefined subband; or a predefined secondary subband; or a subband that needs to feed back the channel adjustment information and is selected by the terminal; or a predefined wideband; or a subband that needs to feed back the channel adjustment information and is indicated by the base station.

(1) Optionally, the terminal may always use one of the foregoing frequency domain granularities as the first frequency domain granularity according to presetting.

(2) Optionally, the terminal may learn, according to, for example, signaling that is notified to the terminal by the base station, that which one of the foregoing frequency domain granularities should be used as the first frequency domain granularity, that is, the terminal may obtain, according to received signaling sent by the base station, the subband that needs to feed back the channel adjustment information and is indicated by the base station.

A manner for obtaining a subband that needs to feed back the channel adjustment information and is indicated by the base station is, for example, obtaining, by the terminal, according to received high layer signaling sent by the base station, one or more subband groups indicated by the high layer signaling, and determining, by the terminal, according to a preset rule, a subband group that needs to feed back the channel adjustment information and is indicated by the base station from the one or more subband groups, and determining the subband that needs to feed back the channel adjustment information and is indicated by the base station from the determined subband group.

A manner for obtaining a subband that needs to feed back the channel adjustment information and is indicated by the base station is, in another example, obtaining, by the terminal, according to received high layer signaling sent by the base station, information of multiple subband groups indicated by the high layer signaling; and determining, by the terminal, according to received dynamic signaling, such as physical downlink control channel (Physical Downlink Control Channel, PDCCH for short) signaling, sent by the base station, a subband group that needs to feed back the channel adjustment information and is indicated by the base station among the multiple subband groups, and determining the subband that needs to feed back the channel adjustment information and is indicated by the base station from the determined subband group.

The foregoing high layer signaling may perform indicating by adopting a bitmap coding indicating method, or perform indicating by adopting a method of indicating an initial position of a subband. When information indicated by the high layer signaling includes N subband groups (N≥2), the preset rule may specifically be a preset order of the N subband groups.

(3) Optionally, the terminal may determine the first frequency domain granularity according to their respective aperiodic feedback mode of the reference access point and/or the non-reference access point.

Specifically, a feedback mode of channel state information of a single access point that is adopted in the 3rd generation partnership project (the 3rd Generation Partnership Project, 3GPP for short) LTE Release 10 protocol may include an aperiodic feedback mode and a periodic feedback mode, where in the aperiodic feedback mode, feedback is triggered by dynamic signaling sent by the base station to the UE; and in the periodic feedback mode, feedback is performed according to a period configured by the base station. Channel state information of any access point, that is, channel state information of a single access point may include a PMI and/or a CQI of the access point. Examples of parameters of a PMI feedback type and a CQI feedback type that correspond to the aperiodic feedback mode and are determined in the 3GPP LTE Release 10 protocol are shown in Table 1.

Table 1

| | | PMI feedback type | | |
| --- | --- | --- | --- | --- |
| | | No PMI | Single PMI | Multiple PMIs |
| CQI feedback type | Wideband CQI | | | Aperiodic feedback mode 1-2 |
| | CQI of a subband that needs to perform feedback and is selected by the UE | Aperiodic feedback mode 2-0 | | Aperiodic feedback mode 2-2 |
| | CQI of a subband configured by an high layer (that is, CQI of each subband) | Aperiodic feedback mode 3-0 | Aperiodic feedback mode 3-1 | |

Only a part of parameters of the PMI feedback type and the CQI feedback type that correspond to the aperiodic feedback mode are recorded in Table 1. In Table 1 in the foregoing, aperiodic feedback modes available for feeding back a PMI include the aperiodic feedback mode 2-1, the aperiodic feedback mode 2-2, and the aperiodic feedback mode 3-1. A downlink data transmission mode and a feedback mode of each access point both need to be separately configured, and each feedback mode can be used only in a specified transmission mode. The terminal may determine, according to a configured downlink data transmission mode and feedback mode of any access point, specific content of channel state information of the access point that needs to be fed back.

If a configured feedback mode of a certain access point is the aperiodic feedback mode 1-2, channel state information of a single access point that needs to be fed back includes a wideband CQI and multiple PMIs; and if a downlink data transmission mode of the access point is a transmission mode 9 with CSI-RS (CSI-Reference Signal) configuration of 8 ports, the multiple PMIs are PMI_I1 of one wideband and PMI_I2 of each subband, where PMI_I1 is a first index value forming an 8-antenna PMI, and PMI_I2 is a second index value forming an 8-antenna PMI. If the configured downlink data transmission mode of the access point is another transmission mode corresponding to the aperiodic feedback mode 1-2, such as a transmission mode 4 or a transmission mode 6, the multiple PMIs are a PMI of each subband.

If a configured feedback mode of a certain access point is the aperiodic feedback mode 2-2, channel state information of a single access point that needs to be fed back includes CQIs of M subbands selected by the UE, a wideband CQI, and multiple PMIs, and if a downlink data transmission mode of the access point is the transmission mode 9 with CSI-RS configuration of 8 ports, the multiple PMIs are wideband PMI_I1, wideband PMI_I2, and PMI_I2 of the M subbands. If the downlink data transmission mode of the access point is another transmission mode corresponding to the aperiodic feedback mode 2-2, the multiple PMIs are a wideband PMI and PMIs of the M subbands.

If a configured feedback mode of a certain access point is the aperiodic feedback mode 3-1, channel state information of a single access point that needs to be fed back includes a CQI of each subband and a single PMI, and if a downlink data transmission mode of the access point is the transmission mode 9 with CSI-RS configuration of 8 ports, the single PMI is wideband PMI_I1 and wideband PMI_I2. If the downlink data transmission mode of the access point is another transmission mode corresponding to the aperiodic feedback mode 3-1, the single PMI is a PMI of one wideband.

An optional definition of a bandwidth size of a subband in the foregoing aperiodic feedback modes is shown in Table 2, where the bandwidth size of a subband refers to the number of resource blocks (Resource Block, RB for short) included in each subband, and a bandwidth size of a wideband refers to the total number of resource blocks included in a system bandwidth.

Table 2

| System bandwidth [RB/wideband] | Aperiodic feedback mode 1-2 Aperiodic feedback mode 3-1 Periodic feedback mode 2-1 [RB/subband] | Aperiodic feedback mode 2-2 [RB/subband] |
|---|---|---|
| 6-7 | NA (Not supported) | NA (Not supported) |
| 8-10 | 4 | 2 |
| 11-26 | 4 | 2 |
| 27-63 | 6 | 3 |
| 64-110 | 8 | 4 |

An optional definition of a bandwidth size of a secondary subband, and optional correspondence between a secondary subband and a subband are shown in Table 3.

Table 3

| System bandwidth [RB/wideband] | RB/subband | RB/secondary subband | Secondary subband/subband |
|---|---|---|---|
| 6-7 | NA (Not supported) | NA (Not supported) | NA (Not supported) |
| 8-10 | 4 | 2 | 2 |
| 11-26 | 4 | 2 | 2 |
| 27-63 | 6 | 3 | 2 |
| 64-110 | 8 | 4 | 2 |

The terminal may determine the first frequency domain granularity according to their respective aperiodic feedback mode of the reference access point and/or the non-reference access point.

Optionally, the first frequency domain granularity of the channel adjustment information that needs to be fed back is the same as a third frequency domain granularity used for feeding back the channel space state information of the non-reference access point and determined according to aperiodic feedback mode of the reference access point or the non-reference access point.

Alternatively, optionally, the first frequency domain granularity of the channel adjustment information that needs to be fed back is similar to a third frequency domain granularity used for feeding back the channel space state information of the non-reference access point and determined in the aperiodic feedback mode of the reference access point or the non-reference access point, which may specifically include:

If their respective aperiodic feedback mode of the reference access point and/or the non-reference access point is the aperiodic feedback mode 1-2, it is determined that the first frequency domain granularity specifically is the predefined subband or the predefined secondary subband, where the predefined subband may be a subband specified in the existing 3GPP LTE Release 10 protocol, as shown in Table 2, and a bandwidth of the predefined secondary subband is greater than 0 and is smaller than or equal to a bandwidth of the predefined subband, as shown in Table 3. In an actual application, the base station may notify, through signaling, the UE to adopt the predefined subband or the predefined secondary subband. An advantage of using the secondary subband is that frequency domain precision of the channel adjustment information can be improved.

Alternatively, if their respective aperiodic feedback mode of the reference access point and/or the non-reference access point is the aperiodic feedback mode 2-2, it is determined that the first frequency domain granularity specifically is the subband that needs to perform feedback and is selected by the UE. The UE may select a subband of the reference access point that needs to perform feedback or a subband of the non-reference access point that needs to perform feedback.

Alternatively, if an aperiodic feedback mode of the reference access point is the aperiodic feedback mode 1-2 and an aperiodic feedback mode of the non-reference access point is the aperiodic feedback mode 2-2, it is determined that the first frequency domain granularity specifically is the predefined secondary subband.

Alternatively, if their respective aperiodic feedback mode of the reference access point and/or the non-reference access point is the aperiodic feedback mode 3-1, it is determined that the first frequency domain granularity specifically is the predefined wideband, where the predefined wideband may be a wideband specified in the existing 3GPP LTE Release 10 protocol, as shown in Table 2.

(4) Optionally, the UE may determine the first frequency domain granularity according to a periodic feedback mode of the non-reference access point.

Examples of a PMI feedback type and a CQI feedback type that correspond to the periodic feedback mode and are determined in the 3GPP LTE Release 10 protocol are shown in Table 4, and for an optional definition of a bandwidth size of a subband in the periodic feedback mode, reference may be made to Table 2.

**Table 4**

| | | PMI feedback type | |
| --- | --- | --- | --- |
| | | No PMI | Single PMI |
| CQI feedback type | Wideband CQI | Periodic feedback mode 1-0 | Periodic feedback mode 1-1 |
| | CQI of a subband that needs to perform feedback and is selected by the UE | Periodic feedback mode 2-0 | Periodic feedback mode 2-1 |

Only a part of parameters of the PMI feedback type and the CQI feedback type that correspond to the periodic feedback mode are recorded in Table 4. In Table 4 in the foregoing, periodic feedback modes available for feeding back a PMI includes the periodic feedback mode 1-1 and the periodic feedback mode 2-1.

If a configured feedback mode of a certain access point is the periodic feedback mode 1-1, channel state information of a single access point that needs to be fed back includes a wideband CQI and a single PMI, and if a downlink data transmission mode of the access point is a transmission mode 9 with CSI-RS configuration of 8 ports, the single PMI is wideband PMI_I1 and wideband PMI_I2. If the configured downlink data transmission mode of the cell is another transmission mode corresponding to the periodic feedback mode 1-1, the single PMI is a wideband PMI.

If a configured downlink data feedback mode of a certain access point is the periodic feedback mode 2-1, channel state information of a single access point that needs to be fed back includes a CQI of a subband that needs to perform feedback and is selected by the UE and a corresponding subband PMI, or a wideband CQI and a wideband PMI. The subband selected by the UE is one subband selected by the UE from J (J≥1) bandwidth parts (Bandwidth Part, BP for short). Especially, if the downlink data transmission mode of the access point is the transmission mode 9 with CSI-RS configuration of 8 ports, the subband PMI is PMI_I1 of one subband and PMI_I2 of one subband, and the wideband PMI is wideband PMI_I1 and wideband PMI_I2.

Optionally, when the feedback mode of the non-reference access point of the UE is the periodic feedback mode, the first frequency domain granularity of the channel adjustment information that needs to be fed back is the same as a second frequency domain granularity used for feeding back the channel state information of the non-reference access point and determined according to the periodic feedback mode of the non-reference access point. Specifically, the second frequency domain granularity is a frequency domain granularity used for feeding back the PMI of the non-reference access point and/or the CQI of the non-reference access point and determined in the periodic feedback mode of the non-reference access point.

It should be noted that the second frequency domain granularity may vary at different moments; and therefore, the first frequency domain granularity may also vary at different moments. In this case, the second frequency domain granularity is a frequency domain granularity used for feeding back the PMI of the non-reference access point and/or the CQI of the non-reference access point at a current feedback moment and determined in a downlink periodic feedback mode of the non-reference access point.

In this embodiment, the UE determines, according to their respective feedback mode of the reference access point and/or the non-reference access point, the first frequency domain granularity of the channel adjustment information that needs to be fed back, which is advantageous to reuse an existing feedback mode, reduce a change to an existing system, and improve system compatibility.

Step 44: The UE sends the channel adjustment information corresponding to the first frequency domain granularity to the base station, and the base station receives the channel adjustment information sent by the UE.

(1) Optionally, the UE may send the channel adjustment information corresponding to the first frequency domain granularity to the base station on a resource used for feeding back the channel adjustment information and configured by the base station, and the base station receives the channel adjustment information on a corresponding resource.

Specifically, the base station may dedicatedly configure a feedback resource for the channel adjustment information through dynamic signaling, and triggers feedback of the channel adjustment information. The UE sends the channel adjustment information corresponding to the first frequency domain granularity that is determined in step 43 to the base station on the dedicatedly configured feedback resource.

(2) Optionally, the UE may send the channel adjustment information corresponding to the first frequency domain granularity that is determined in step 43 to the base station on a resource used for aperiodic feedback and configured by the base station, and the base station receives the channel adjustment information on a corresponding resource.

Optionally, if the feedback content determined by the UE in step 42 in the foregoing does not include the channel state information of the non-reference access point, for example, does not include the PMI of the non-reference access point or the CQI of the non-reference access point, the UE may send the channel adjustment information to the base station on all or a part of resources used to aperiodically feed back the PMI of the non-reference access point and/or the CQI of the non-reference access point and configured by the base station.

Optionally, if the feedback content determined by the UE in step 42 in the foregoing includes the PMI of the non-reference access point, the UE may send the channel adjustment information to the base station on all or a part of resources used to aperiodically feed back the CQI of the non-reference access point and configured by the base station.

Optionally, if the feedback content determined by the UE in step 42 in the foregoing includes the CQI of the non-reference access point, the UE may send the channel adjustment information to the base station on all or a part of resources used to aperiodically feed back the PMI of the non-reference access point and configured by the base station.

(3) Optionally, the UE may send the channel adjustment information corresponding to the first frequency domain granularity that is determined in step 43 to the base station on all or a part of resources used for periodic feedback and configured by the base station, and the base station receives the channel adjustment information on a corresponding resource.

Optionally, if the feedback content determined by the UE in step 42 in the foregoing does not include the channel state information of the non-reference access point, for example, does not include the PMI of the non-reference access point or the CQI of the non-reference access point, the UE may send the channel adjustment information to the base station on all or a part of resources used to periodically feed back the PMI of the non-reference access point and/or the CQI of the non-reference access point and configured by the base station. In this case, the first frequency domain granularity of the channel adjustment information that needs to be fed back is the same as the second frequency domain granularity used for feeding back the PMI of the non-reference access point and/or a CQI of a coordinated cell, for example, the channel adjustment information of a subband is fed back on a resource used to feed back a subband PMI of the non-reference access point and/or a subband CQI of the non-reference access point, and the channel adjustment information of a wideband is fed back on a resource used to feed back a wideband PMI of the non-reference access point and/or the subband CQI of the non-reference access point, and so on.

Optionally, if the feedback content determined by the UE in step 42 in the foregoing includes the PMI of the non-reference access point, the UE may send the channel adjustment information to the base station on all or a part of resources used to periodically feed back the CQI of the non-reference access point and configured by the base station. In this case, the first frequency domain granularity of the channel adjustment information that needs to be fed back may be the same as the second frequency domain granularity for feeding back the CQI of the non-reference access point.

Optionally, if the feedback content determined by the UE in step 42 in the foregoing includes the CQI of the non-reference access point, the UE may send the channel adjustment information to the base station on all or a part of resources used to periodically feed back the PMI of the non-reference access point and configured by the base station. In this case, the first frequency domain granularity of the channel adjustment information that needs to be fed back may be the same as the second frequency domain granularity for feeding back the PMI of the non-reference access point.

In the following, first, that the feedback content determined in step 42 in the foregoing further includes the PMI of the non-reference access point is used as an example to describe reuse of a resource for feeding back the channel adjustment information in a periodic feedback mode in detail. The UE feeds back a PMI of a non-reference access point to the base station, and the base station may use the PMI of the non-reference access point as a CSI of the non-reference access point.

If a periodic feedback mode of the non-reference access point is 1-1, on a resource used to periodically feed back channel space state information of the non-reference access point, specific content of the channel space state information of the non-reference access point that originally needs to be fed back includes: a wideband PMI (or wideband PMI_I1 and wideband PMI_I2) and a wideband CQI. Then, the UE may feed back the wideband PMI (or the wideband PMI_I1 and wideband PMI_I2) of the non-reference access point on a resource originally used to feed back the wideband PMI (or the wideband PMI_I1 and wideband PMI_I2) of the non-reference access point; and feed back the channel adjustment information on a resource originally used to feed back the wideband CQI of the non-reference access point.

If the periodic feedback mode of the non-reference access point is 1-1, a resource used to periodically feed back the channel space state information of the non-reference access point is a resource determined in the periodic feedback mode 1-1 corresponding to a sub-mode 1 of the transmission mode 9 with CSI-RS configuration of 8 ports, and specific content of the channel space state information of the non-reference access point that originally needs to be periodically fed back on the resource includes: wideband PMI_I1, wideband PMI_I2, and a wideband CQI. Then, the UE may feed back a wideband PMI of the non-reference access point on a resource originally used to feed back the wideband PMI_I1 of the non-reference access point; and feed back the channel adjustment information on a resource originally used to feed back the wideband PMI_I2 of the non-reference access point and/or the wideband CQI of the non-reference access point.

If the periodic feedback mode of the non-reference access point is 2-1, a resource used to feed back the channel space state information of the non-reference access point is a resource determined in the periodic feedback mode 2-1 corresponding to the sub-mode 1 of the transmission mode 9 with CSI-RS configuration of 8 ports, and specific content of the channel space state information of the non-reference access point that originally needs to be fed back on the resource includes: wideband PMI_I1, wideband PMI_I2, PMI_I2 of one subband selected by the UE from J (J≥1) bandwidth parts, a CQI of a subband that needs to perform feedback and is selected by the UE, and one subband selected by the UE from the J bandwidth parts, where a CQI of the subband and a wideband CQI are fed back. Then, the UE may feed back a wideband PMI of the non-reference access point on a resource originally used to feed back the wideband PMI_I1 of the non-reference access point; and feed back the channel adjustment information on a resource originally used to feed back the PMI_I2 and/or a CQI of the non-reference access point, where the UE feeds back the channel adjustment information of a subband on a resource used to feed back subband PMI_I2 of the non-reference access point and/or the subband CQI of the non-reference access point, and feeds back the channel adjustment information of a wideband on a resource used to feed back the wideband PMI_I2 of the non-reference access point and/or the wideband CQI of the non-reference access point.

If the periodic feedback mode of the non-reference access point is 2-1, on a resource used to periodically feed back the channel space state information of the non-reference access point, specific content of the channel space state information of the non-reference access point that originally needs to be fed back includes: a wideband PMI (or wideband PMI_I1 and wideband PMI_I2), a PMI (or subband PMI_I2) of one subband selected by the UE from J (J≥1) bandwidth parts, a CQI of a subband that needs to perform feedback and is selected by the UE, and one subband selected by the UE from the J bandwidth parts, where a CQI of the subband and a wideband CQI are fed back. Then, the UE may feed back the wideband PMI (or the wideband PMI_I1 and wideband PMI_I2) of the non-reference access point on a resource originally used to feed back the wideband PMI (or the wideband PMI_I1 and wideband PMI_I2) of the non-reference access point; feed back the subband PMI (or the subband PMI_I2) of the non-reference access point on a resource originally used to feed back the subband PMI (or the subband PMI_I2) of the non-reference access point; and feed back the channel adjustment information on a resource originally used to feed back the CQI of the non-reference access point, where the UE feeds back the channel adjustment information of a subband on a resource used to feed back the subband PMI_I2 of the non-reference access point and/or the subband CQI of the non-reference access point, and feeds back the channel adjustment information of a wideband on a resource used to feed back the wideband PMI_I2 of the non-reference access point and/or the wideband CQI of the non-reference access point.

Then, that the feedback content determined in step 42 in the foregoing further includes the CQI of the non-reference access point is used as an example to describe reuse of a resource for feeding back the channel adjustment information in a periodic feedback mode in detail. The UE feeds back a CQI of a non-reference access point to the base station, and the base station may use the CQI of the non-reference access point as a CSI of the non-reference access point.

If a periodic feedback mode of the non-reference access point is the periodic feedback mode 1-1 or 2-1, the channel adjustment information is fed back at the same time of feeding back the CQI of the non-reference access point; the channel adjustment information of a subband is fed back at the same time of feeding back a subband CQI of the non-reference access point; and the channel adjustment information of a wideband is fed back at the same time of feeding back a wideband CQI of the non-reference access point, thereby implementing reuse of a time sequence resource used to feed back the CQI of the non-reference access point. It should be noted that a resource used for feedback may be uplink data bits used to bear the channel state information, and a channel bearing these bits may be a physical uplink shared channel (Physical uplink shared channel, PUSCH for short), a physical uplink control channel (Physical uplink control channel, PUCCH for short) format 2 (format 2), or a PUCCH format 3 (format 3). The PUCCH format 3 can bear 22 bits, which is advantageous to bear more channel adjustment information or bear more accurate channel adjustment information in periodic feedback.

In this embodiment, feedback of the channel adjustment information is implemented. In addition, in an application scenario of a periodic feedback mode of multiple cells, a base station needs to configure a feedback time sequence for each cell, and the number of bits occupied for feedback based on the periodic feedback mode is small, for example, only 11 bits; and therefore, periodic feedback resources are very precious. In this embodiment, a UE may reuse all or a part of resources used for periodic feedback and configured by the base station, so as to feed back the channel adjustment information, thereby reducing a feedback overhead. Alternatively, in this embodiment, a UE may reuse all or a part of resources used for aperiodic feedback and configured by the base station, so as to send the channel adjustment information, to reduce a feedback overhead.

It should be noted that in this embodiment, if only a part of feedback resources are reused for the channel adjustment information, a remaining feedback resource may be discarded, and at this time, accuracy that the base station receives feedback signaling can be improved; or a remaining feedback resource may bear other information, for example, a joint CQI of multiple access points, downlink data confirmation information, access point selection information, and so on, and at this time, utilization efficiency of the feedback resources can be improved.

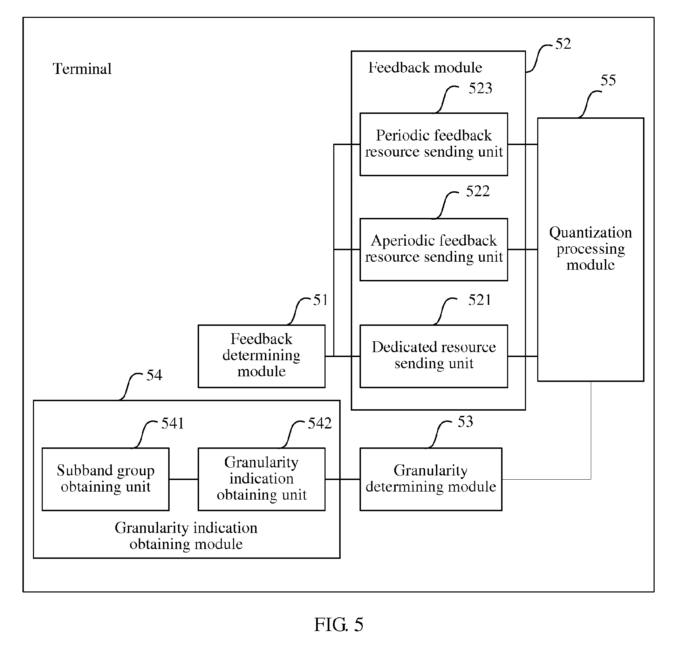

FIG. 5 is a schematic structural diagram of a terminal according to a fourth embodiment of the present invention. As shown in FIG. 5, the terminal provided in this embodiment includes: a feedback determining module 51 and a feedback module 52.

The feedback determining module 51 may be configured to determine that channel information between access points needs to be fed back.

The feedback module 52 may be configured to send, according to a determination result of the feedback determining module 51, feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station.

In the foregoing technical solutions, the terminal may determine, in different manners, whether the channel information between the access points needs to be fed back to the base station. For example, optionally, the feedback determining module 51 may be specifically configured to determine, through received multi-access point feedback configuration signaling sent by the base station, that the channel information between the access points needs to be fed back. Alternatively, the feedback determining module 51 may be specifically configured to determine, when a current downlink data transmission mode of the terminal is a CoMP mode or a CoMP joint transmission mode, that the channel information between the access points needs to be fed back.

In order to determine feedback precision of the channel adjustment information, optionally, the terminal may further include: a granularity determining module 53. The granularity determining module 53 may be configured to determine a first frequency domain granularity of the channel adjustment information that needs to be fed back. Correspondingly, the feedback module 52 may be specifically configured to send, according to the determination result of the feedback determining module 51, the channel adjustment information corresponding to the first frequency domain granularity that is determined by the granularity determining module 53 to the base station on the resource configured by the base station.

The first frequency domain granularity may include: a predefined subband; or a predefined secondary subband, where a bandwidth of the predefined secondary subband is smaller than or equal to that of the predefined subband; or a subband that needs to feed back the channel adjustment information and is selected by the terminal, including: a subband that needs to feed back the channel adjustment information and is selected by the terminal at the reference access point, a subband that needs to feed back the channel adjustment information and is selected by the terminal at the non-reference access point, or a subband that needs to feed back the channel adjustment information and is selected by the terminal jointly at the reference access point and the non-reference access point; or a predefined wideband; or a subband that needs to feed back the channel adjustment information and is indicated by the base station.

Optionally, the terminal may determine feedback precision of the channel adjustment information according to an indication of the base station. In this case, the terminal may further include: a granularity indication obtaining module 54. The granularity indication obtaining module 54 may be configured to obtain, according to received signaling sent by the base station, a subband that needs to feed back the channel adjustment information and is indicated by the base station. Correspondingly, the granularity determining module 53 may be specifically configured to determine that the subband that needs to feed back the channel adjustment information, is indicated by the base station, and is obtained by the granularity indication obtaining module 54 is the first frequency domain granularity.

The granularity indication obtaining module 54 may further include: a subband group obtaining unit 541 and a granularity indication obtaining unit 542.

The subband group obtaining unit 541 may be configured to obtain, according to received high layer signaling sent by the base station, one or more subband groups indicated by the high layer signaling; and the granularity indication obtaining unit 542 may be configured to determine, according to a preset rule, a subband group that needs to feed back the channel adjustment information and is indicated by the base station from the one or more subband groups obtained by the subband group obtaining unit 541, and determine the subband that needs to feed back the channel adjustment information and is indicated by the base station from the determined subband group. Alternatively, the subband group obtaining unit 541 may be configured to obtain, according to received high layer signaling sent by the base station, multiple subband groups indicated by the high layer signaling; and the granularity indication obtaining unit 542 may be configured to determine a subband group that needs to feed back the channel adjustment information and is indicated by the base station from the multiple subband groups obtained by the subband group obtaining unit 541, and determine the subband that needs to feed back the channel adjustment information and is indicated by the base station from the determined subband group.

Optionally, the terminal may determine the feedback precision of the channel adjustment information according to a feedback mode. In this case, the granularity determining module 53 may be specifically configured to determine the first frequency domain granularity according to their respective feedback mode of the reference access point and/or the non-reference access point.

Optionally, the first frequency domain granularity may be the same as a frequency domain granularity corresponding to a periodic feedback mode or an aperiodic feedback mode. Corresponding to the periodic feedback mode, the granularity determining module 53 may be specifically configured to determine that a second frequency domain granularity of their respective periodic feedback mode of the reference access point and/or the non-reference access point is the first frequency domain granularity. Corresponding to the aperiodic feedback mode, the granularity determining module 53 may be specifically configured to determine that a third frequency domain granularity of their respective aperiodic feedback mode of the reference access point and/or the non-reference access point is the second frequency domain granularity.

Optionally, the first frequency domain granularity may be similar to a frequency domain granularity corresponding to an aperiodic feedback mode. For example, corresponding to the aperiodic feedback mode, the granularity determining module 53 may be specifically configured to: if their respective aperiodic feedback mode of the reference access point and/or the non-reference access point is an aperiodic feedback mode 1-2, determine that the first frequency domain granularity is the predefined subband or the predefined secondary subband. Alternatively, the granularity determining module 53 may be specifically configured to: if their respective aperiodic feedback mode of the reference access point and/or the non-reference access point is an aperiodic feedback mode 2-2, determine that the first frequency domain granularity is the subband that needs to perform feedback and is selected by the terminal. Alternatively, the granularity determining module 53 may be specifically configured to: if an aperiodic feedback mode of the reference access point is an aperiodic feedback mode 1-2 and an aperiodic feedback mode of the non-reference access point is an aperiodic feedback mode 2-2, determine that the first frequency domain granularity is the predefined secondary subband. Alternatively, the granularity determining module 53 may be specifically configured to: if their respective aperiodic feedback mode of the reference access point and/or the non-reference access point is an aperiodic feedback mode 3-1, determine that the first frequency domain granularity is the predefined wideband.

Optionally, from the perspective of different resources for sending the channel adjustment information, the feedback module 52 may include one of the following units: a dedicated resource sending unit 521, an aperiodic feedback resource sending unit 522, and a periodic feedback resource sending unit 523. The dedicated resource sending unit 521 may be configured to send, according to the determination result of the feedback determining module 51, the channel adjustment information to the base station on a dedicated resource used to feed back the channel adjustment information and configured by the base station. The aperiodic feedback resource sending unit 522 may be configured to send, according to the determination result of the feedback determining module 51, the channel adjustment information to the base station on all or a part of resources used for aperiodic feedback and configured by the base station. The periodic feedback resource sending unit 523 may be configured to send, according to the determination result of the feedback determining module 51, the channel adjustment information to the base station on all or a part of resources used for periodic feedback and configured by the base station.

If the terminal reuses all or a part of resources used for aperiodic feedback and configured by the base station to send the channel adjustment information, optionally, the aperiodic feedback resource sending unit 522 may be specifically configured to: if the feedback content does not include channel state information of the non-reference access point, send, according to the determination result of the feedback determining module, the channel adjustment information to the base station on all or a part of resources used to aperiodically feed back the channel state information of the non-reference access point and configured by the base station, where the channel state information includes channel space state information and channel quality information; or the aperiodic feedback resource sending unit 522 may be specifically configured to: if the feedback content includes channel space state information of the non-reference access point, send, according to the determination result of the feedback determining module, the channel adjustment information to the base station on all or a part of resources used to aperiodically feed back channel quality information of the non-reference access point and configured by the base station; or the aperiodic feedback resource sending unit 522 may be specifically configured to: if the feedback content includes channel space state information of the non-reference access point, send, according to the determination result of the feedback determining module, the channel adjustment information to the base station on all or a part of resources used to aperiodically feed back the channel space state information of the non-reference access point and configured by the base station.

If the terminal reuses all or a part of resources used for periodic feedback and configured by the base station to send the channel adjustment information, optionally, the periodic feedback resource sending unit 523 may be specifically configured to: if the feedback content does not include channel state information of the non-reference access point, send, according to the determination result of the feedback determining module, the channel adjustment information to the base station on all or a part of resources used to periodically feed back the channel state information of the non-reference access point and configured by the base station, where the channel state information includes channel space state information and channel quality information; or the periodic feedback resource sending unit 523 may be specifically configured to: if the feedback content includes channel space state information of the non-reference access point, send, according to the determination result of the feedback determining module, the channel adjustment information to the base station on all or a part of resources used to periodically feed back channel quality information of the non-reference access point and configured by the base station; or the periodic feedback resource sending unit 523 may be specifically configured to: if the feedback content includes channel quality information of the non-reference access point, send, according to the determination result of the feedback determining module, the channel adjustment information to the base station on all or a part of resources used to periodically feed back channel space state information of the non-reference access point and configured by the base station.

Further, the terminal may further include: a quantization processing module 55. The quantization processing module 55 may be configured to perform quantization processing on the channel adjustment information before the feedback module sends the channel adjustment information, where a codebook, based on which the quantization processing module performs the quantization processing on the channel adjustment information, is predetermined, or is designated by the base station, and the codebook includes one or more of the following constellation diagrams: a BPSK constellation diagram of 1 bit, a QPSK constellation diagram of 2 bits, an 8PSK constellation diagram of 3 bits, and a 16QAM constellation diagram of 4 bits. Correspondingly, the feedback module 52 may be specifically configured to send, according to the determination result of the feedback determining module 51, the channel adjustment information on which the quantization processing has been performed to the base station on the resource configured by the base station.

When determining that channel information between cells needs to be fed back, the terminal provided in this embodiment can feed back channel adjustment information between a reference access point and a non-reference access point to a base station, so as to provide a solution for feeding back channel information between access points. For a working mechanism of the terminal in this embodiment, reference may be made to the description about the terminal or UE in the foregoing method embodiment, which is not described herein again.

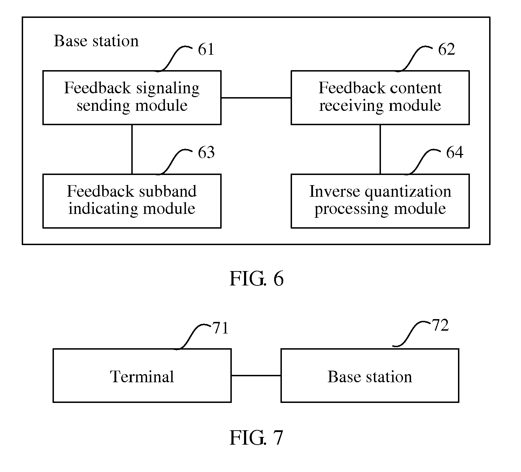

FIG. 6 is a schematic structural diagram of a base station according to a fifth embodiment of the present invention. As shown in FIG. 6, the base station provided in this embodiment includes: a feedback signaling sending module 61 and a feedback content receiving module 62.

The feedback signaling sending module 61 may be configured to send multi-access point feedback configuration signaling to a terminal.

The feedback content receiving module 62 may be configured to receive, on a configured resource, feedback content that is sent by the terminal according to the multi-access point feedback configuration signaling sent by the feedback instruction sending module, where the feedback content includes at least: channel adjustment information between a reference access point and a non-reference access point; and the configured resource includes: a configured dedicated resource used to feed back the channel adjustment information, or all or a part of configured resources used for periodic feedback, or all or a part of configured resources used for aperiodic feedback.

Optionally, the base station may indicate, to the terminal, a subband that needs to feed back the channel adjustment information. In this case, the base station may further include: a feedback subband indicating module 63. The feedback subband indicating module 63 may be configured to, after the feedback instruction sending module sends the multi-access point feedback configuration signaling, send, to the terminal, signaling used to indicate a subband that needs to feed back the channel adjustment information.

The base station may indicate, to the terminal in different manners, the subband that needs to feed back the channel adjustment information. For example, optionally, the feedback subband indicating module 63 may be specifically configured to, after the feedback instruction sending module sends the multi-access point feedback configuration signaling, send high layer signaling to the terminal for indicating one or more subband groups, so that the terminal determines, according to a preset rule, a subband group that needs to feed back the channel adjustment information from the one or more subband groups, and determines the subband that needs to feed back the channel adjustment information and is indicated by the base station from the determined subband group; or the feedback subband indicating module 63 may be specifically configured to, after the feedback instruction sending module sends the multi-access point feedback configuration signaling, send high layer signaling to the terminal for indicating multiple subband groups, send dynamic signaling to the terminal for indicating a subband group that needs to feed back the channel adjustment information among the multiple subbands, and determine the subband that needs to feed back the channel adjustment information and is indicated by the base station from a determined subband group.

Optionally, the base station may further include: an inverse quantization processing module 64. The inverse quantization processing module 64 may be configured to perform, based on a predetermined codebook, inverse quantization processing on the channel adjustment information received by the feedback content receiving module, where the codebook includes one or more of the following constellation diagrams: a BPSK constellation diagram of 1 bit, a QPSK constellation diagram of 2 bits, an 8PSK constellation diagram of 3 bits, and a 16QAM constellation diagram of 4 bits.

The base station provided in this embodiment can trigger, through signaling, a terminal to feed back channel adjustment information between a reference access point and a non-reference access point, so as to provide a solution for feeding back channel information between access points. For a working mechanism of the base station in this embodiment, reference may be made to the description about the base station, the base station, or the eNB in the foregoing method embodiment, which is not described herein again.

FIG. 7 is a schematic structural diagram of a communication system according to a sixth embodiment of the present invention. As shown in FIG. 7, the communication system provided in this embodiment includes: a terminal 71 and a base station 72, where for a specific structure of the terminal 71, reference may be made to the description about the embodiment corresponding to FIG. 5, and for a specific structure of the base station 72, reference may be made to the description about the embodiment corresponding to FIG. 6, which are not described herein again.

According to the communication system provided in this embodiment, when determining that channel information between cells needs to be fed back, a terminal can feed back channel adjustment information between a reference access point and a non-reference access point to a base station, so as to provide a solution for feeding back channel information between access points.

It may be understood by persons of ordinary skill in the art that, the accompanying drawings are merely schematic diagrams of an embodiment, and modules or procedures in the accompanying drawings are not necessarily required for implementing the present invention.

Persons of ordinary skill in the art may understand that, the modules in the apparatuses in the embodiments may be distributed in the apparatuses in the embodiments according to the description of the embodiments, or may be located in one or more apparatuses that are different from those described in the embodiments. The modules in the foregoing embodiments may be combined into one module, or split into multiple sub-modules.

Finally, it should be noted that the foregoing embodiments are merely intended for describing the technical solutions of the present invention rather than limiting the present invention. Although the present invention is described in detail with reference to the foregoing embodiments, persons of ordinary skill in the art should understand that they may still make modifications to the technical solutions described in the foregoing embodiments, or make equivalent replacements to some technical features thereof; however, these modifications or replacements do not make the essence of corresponding technical solutions depart from the spirit and scope of the technical solutions in the embodiments of the present invention.

**Claims**

1. A method for feeding back channel information, comprising:

   determining that channel information between access points needs to be fed back; and
   sending feedback content to a base station on a resource configured by the base station,
   wherein
   the feedback content comprises at least: channel adjustment information between a reference access point and a non-reference access point; and the resource configured by the base station comprises: a dedicated resource used to feed back the channel adjustment information and configured by the base station, or all or a part of resources used for periodic feedback and configured by the base station, or all or a part of resources used for aperiodic feedback and configured by the base station.

2. The method according to claim 1, wherein the determining that channel information between access points needs to be fed back comprises: determining, through received multi-access point feedback configuration signaling sent by the base station, that the channel information between the access points needs to be fed back.

3. The method according to claim 2, wherein the multi-access point feedback configuration signaling comprises: high layer signaling or dynamic signaling used to indicate whether the channel information between the access points needs to be fed back.

4. The method according to claim 1, wherein the determining that channel information between access points needs to be fed back comprises: determining, when a current downlink data transmission mode is a CoMP mode or a CoMP joint transmission mode, that the channel information between the access points needs to be fed back.

5. The method according to any one of claims 1 to 4,
   before the sending the feedback content to the base station, further comprising: determining a first frequency domain granularity of the channel adjustment information that needs to be fed back, wherein
   the channel adjustment information specifically is channel adjustment information corresponding to the first frequency domain granularity.

6. The method according to claim 5, wherein the first frequency domain granularity comprises:

   a predefined subband; or
   a predefined secondary subband, wherein a bandwidth of the predefined secondary subband is smaller than or equal to that of the predefined subband;
   a subband that needs to feed back the channel adjustment information and is selected by the terminal, comprising: a subband that needs to feed back the channel adjustment information and is selected by the terminal at the reference access point, or a subband that needs to feed back the channel adjustment information and is selected by the terminal at the non-reference access point, or a subband that needs to feed back the channel adjustment information and is selected by the terminal jointly at the reference access point and the non-reference access point;
   a predefined wideband; or
   a subband that needs to feed back the channel adjustment information and is indicated by the base station.

7. The method according to claim 5, before the determining a first frequency domain granularity of the channel adjustment information that needs to be fed back, further comprising: obtaining, according to received signaling sent by the base station, a subband that needs to feed back the channel adjustment information and is indicated by the base station, wherein
   the determining a first frequency domain granularity of the channel adjustment information that needs to be fed back comprises: determining that the subband that needs to feed back the channel adjustment information and is indicated by the base station is the first frequency domain granularity.

8. The method according to claim 7, wherein the obtaining, according to received signaling sent by the base station, a subband that needs to feed back the channel adjustment information and is indicated by the base station comprises:

   obtaining, according to received high layer signaling sent by the base station, one or more subband groups indicated by the high layer signaling, determining, according to a preset rule, a subband group that needs to feed back the channel adjustment information and is indicated by the base station from the one or more subband groups, and determining the subband that needs to feed back the channel adjustment information and is indicated by the base station from the determined subband group; or
   obtaining, according to received high layer signaling sent by the base station, multiple subband groups indicated by the high layer signaling, determining, according to received dynamic signaling sent by the base station, a subband group that needs to feed back the channel adjustment information and is indicated by the base station from the multiple subband groups, and determining the subband that needs to feed back the channel adjustment information and is indicated by the base station from the determined subband group.

9. The method according to claim 6, wherein the determining a first frequency domain granularity comprises: determining the first frequency domain granularity according to their respective feedback mode of the reference access point and/or the non-reference access point.

10. The method according to claim 9, wherein the determining the first frequency domain granularity according to their respective feedback mode of the reference access point and/or the non-reference access point comprises:

determining that a second frequency domain granularity of their respective periodic feedback mode of the reference access point and/or the non-reference access point is the first frequency domain granularity; or determining a third frequency domain granularity of their respective aperiodic feedback mode of the reference access point and/or the non-reference access point is the second frequency domain granularity.

11. The method according to claim 9, wherein the determining the first frequency domain granularity according to their respective feedback mode of the reference access point and/or the non-reference access point comprises:

if their respective aperiodic feedback mode of the reference access point and/or the non-reference access point is an aperiodic feedback mode 1-2, determining that the first frequency domain granularity is the predefined subband or the predefined secondary subband; or
if their respective aperiodic feedback mode of the reference access point and/or the non-reference access point is an aperiodic feedback mode 2-2, determining that the first frequency domain granularity is the subband that needs to perform feedback and is selected by the terminal; or
if an aperiodic feedback mode of the reference access point is an aperiodic feedback mode 1-2 and an aperiodic feedback mode of the non-reference access point is an aperiodic feedback mode 2-2, determining that the first frequency domain granularity is the predefined secondary subband; or
if their respective aperiodic feedback mode of the reference access point and/or the non-reference access point is an aperiodic feedback mode 3-1, determining that the first frequency domain granularity is the predefined wideband.

12. The method according to any one of claims 1 to 4, wherein the sending the channel adjustment information to the base station on all or a part of resources used for aperiodic feedback and configured by the base station comprises:

if the feedback content does not comprise channel state information of the non-reference access point, sending the channel adjustment information to the base station on all or a part of resources used to aperiodically feed back the channel state information of the non-reference access point and configured by the base station, wherein the channel state information comprises channel space state information and channel quality information; or
if the feedback content comprises channel space state information of the non-reference access point, sending the channel adjustment information to the base station on all or a part of resources used to aperiodically feed back channel quality information of the non-reference access point and configured by the base station; or
if the feedback content comprises channel space state information of the non-reference access point, sending the channel adjustment information to the base station on all or a part of resources used to aperiodically feed back the channel space state information of the non-reference access point and configured by the base station.

13. The method according to any one of claims 1 to 4, wherein the sending the channel adjustment information to the base station on all or a part of resources used for periodic feedback and configured by the base station comprises:

if the feedback content does not comprise channel state information of the non-reference access point, sending the channel adjustment information to the base station on all or a part of resources used to periodically feed back the channel state information of the non-reference access point and configured by the base station, wherein the channel state information comprises channel space state information and channel quality information; or
if the feedback content comprises channel space state information of the non-reference access point, sending the channel adjustment information to the base station on all or a part of resources used to periodically feed back channel quality information of the non-reference access point and configured by the base station; or
if the feedback content comprises channel quality information of the non-reference access point, sending the channel adjustment information to the base station on all or a part of resources used to periodically feed back channel space state information of the non-reference access point and configured by the base station.

14. The method according to any one of claims 1 to 4, wherein the reference access point is a serving access point, or the reference access point is a cell or a node designated by the base station.

15. The method according to any one of claims 1 to 4,

before the sending the channel adjustment information to the base station, further comprising: performing quantization processing on the channel adjustment information, wherein

the sending the channel adjustment information to the base station comprises: sending the channel adjustment information on which the quantization processing has been performed to the base station; and

a codebook, based on which the quantization processing is performed on the channel adjustment information, is predetermined, or is designated by the base station, and the codebook comprises one or more of the following constellation diagrams: a BPSK constellation diagram of 1 bit, a QPSK constellation diagram of 2 bits, an 8PSK constellation diagram of 3 bits, and a 16QAM constellation diagram of 4 bits.

16. A method for feeding back channel information, comprising:

sending multi-access point feedback configuration signaling to a terminal; and
receiving, on a configured resource, feedback content that is sent by the terminal according to the multi-access point feedback configuration signaling, wherein the feedback content comprises at least: channel adjustment information between a reference access point and a non-reference access point; and the configured resource comprises: a configured dedicated resource used to feed back the channel adjustment information, or all or a part of configured resources used for periodic feedback, or all or a part of configured resources used for aperiodic feedback.

17. The method according to claim 16, before the receiving feedback content that is sent by the terminal according to the multi-access point feedback configuration signaling, further comprising:

sending, to the terminal, signaling used to indicate a subband that needs to feed back the channel adjustment information.

18. The method according to claim 17, wherein the sending, to the terminal, signaling used to indicate a subband that needs to feed back the channel adjustment information comprises:

sending high layer signaling to the terminal for indicating one or more subband groups, so that the terminal determines, according to a preset rule, a subband group that needs to feed back the channel adjustment information from the one or more subband groups, and determines the subband that needs to feed back the channel adjustment information and is indicated by the base station from the determined subband group; or
sending high layer signaling to the terminal for indicating multiple subbands, sending dynamic signaling to the terminal for indicating a subband group that needs to feed back the channel adjustment information among the multiple subbands, and determining the subband that needs to feed back the channel adjustment information and is indicated by the base station from a determined subband group.

19. The method according to any one of claims 16 to 18, after the receiving the channel adjustment information sent by the terminal, further comprising:

performing, based on a predetermined codebook, inverse quantization processing on the channel adjustment information, wherein
the codebook comprises one or more of the following constellation diagrams: a BPSK constellation diagram of 1 bit, a QPSK constellation diagram of 2 bits, an 8PSK constellation diagram of 3 bits, and a 16QAM constellation diagram of 4 bits.

20. A terminal, comprising:

a feedback determining module, configured to determine that channel information between access points needs to be fed back; and
a feedback module, configured to send, according to a determination result of the feedback determining module, feedback content to a base station on a resource configured by the base station, wherein the feedback content comprises at least: channel adjustment information between a reference access point and a non-reference access point; and the resource configured by the base station comprises: a dedicated resource used to feed back the channel adjustment information and configured by the base station, or all or a part of resources used for periodic feedback and configured by the base station, or all or a part of resources used for aperiodic feedback and configured by the base station.

**21.** The terminal according to claim 20, wherein
the feedback determining module is specifically configured to determine, through received multi-access point feedback configuration signaling sent by the base station, that the channel information between the access points needs to be fed back.

**22.** The terminal according to claim 20, wherein
the feedback determining module is specifically configured to determine, when a current downlink data transmission mode is a CoMP mode or a CoMP joint transmission mode, that the channel information between the access points needs to be fed back.

**23.** The terminal according to any one of claims 20 to 22, further comprising: a granularity determining module, wherein
the granularity determining module is configured to determine a first frequency domain granularity of the channel adjustment information that needs to be fed back; and
the feedback module is specifically configured to send, according to the determination result of the feedback determining module, the channel adjustment information corresponding to the first frequency domain granularity that is determined by the granularity determining module to the base station on the resource configured by the base station.

**24.** The terminal according to claim 23, further comprising: a granularity indication obtaining module, wherein
the granularity indication obtaining module is configured to obtain, according to received signaling sent by the base station, a subband that needs to feed back the channel adjustment information and is indicated by the base station; and
the granularity determining module is specifically configured to determine that the subband that needs to feed back the channel adjustment information, is indicated by the base station, and is obtained by the granularity indication obtaining module is the first frequency domain granularity.

**25.** The terminal according to claim 24, wherein the granularity indication obtaining module comprises: a subband group obtaining unit and a granularity indication obtaining unit, wherein
the subband group obtaining unit is configured to obtain, according to received high layer signaling sent by the base station, one or more subband groups indicated by the high layer signaling; and the granularity indication obtaining unit is configured to determine, according to a preset rule, a subband group that needs to feed back the channel adjustment information and is indicated by the base station from the one or more subband groups obtained by the subband group obtaining unit, and determine the subband that needs to feed back the channel adjustment information and is indicated by the base station from the determined subband group;
or
the subband group obtaining unit is configured to obtain, according to received high layer signaling sent by the base station, multiple subband groups indicated by the high layer signaling; and the granularity indication obtaining unit is configured to determine a subband group that needs to feed back the channel adjustment information and is indicated by the base station from the multiple subband groups obtained by the subband group obtaining unit, and determine the subband that needs to feed back the channel adjustment information and is indicated by the base station from the determined subband group.

**26.** The terminal according to claim 23, wherein
the granularity determining module is specifically configured to determine the first frequency domain granularity according to their respective feedback mode of the reference access point and/or the non-reference access point.

**27.** The terminal according to claim 26, wherein
the granularity determining module is specifically configured to determine that a second frequency domain granularity of their respective periodic feedback mode of the reference access point and/or the non-reference access point is the first frequency domain granularity;
or
the granularity determining module is specifically configured to determine that a third frequency domain granularity of their respective aperiodic feedback mode of the reference access point and/or the non-reference access point is the second frequency domain granularity.

**28.** The terminal according to claim 26, wherein
the granularity determining module is specifically configured to: if their respective aperiodic feedback mode of the reference access point and/or the non-reference access point is an aperiodic feedback mode 1-2, determine that the first frequency domain granularity is a predefined subband or a predefined secondary subband; or

the granularity determining module is specifically configured to: if their respective aperiodic feedback mode of the reference access point and/or the non-reference access point is an aperiodic feedback mode 2-2, determine that the first frequency domain granularity is a subband that needs to perform feedback and is selected by the terminal; or the granularity determining module is specifically configured to: if an aperiodic feedback mode of the reference access point is an aperiodic feedback mode 1-2 and an aperiodic feedback mode of the non-reference access point is an aperiodic feedback mode 2-2, determine that the first frequency domain granularity is a predefined secondary subband; or the granularity determining module is specifically configured to: if their respective aperiodic feedback mode of the reference access point and/or the non-reference access point is an aperiodic feedback mode 3-1, determine that the first frequency domain granularity is a predefined wideband.

29. The terminal according to any one of claims 20 to 22, wherein the feedback module comprises one of the following:

a dedicated resource sending unit, configured to send, according to the determination result of the feedback determining module, the channel adjustment information to the base station on a dedicated resource used to feed back the channel adjustment information and configured by the base station;
an aperiodic feedback resource sending unit, configured to send, according to the determination result of the feedback determining module, the channel adjustment information to the base station on all or a part of resources used for aperiodic feedback and configured by the base station; and
a periodic feedback resource sending unit, configured to send, according to the determination result of the feedback determining module, the channel adjustment information to the base station on all or a part of resources used for periodic feedback and configured by the base station.

30. The terminal according to claim 29, wherein
the aperiodic feedback resource sending unit is specifically configured to: if the feedback content does not comprise channel state information of the non-reference access point, send, according to the determination result of the feedback determining module, the channel adjustment information to the base station on all or a part of resources used to aperiodically feed back the channel state information of the non-reference access point and configured by the base station, wherein the channel state information comprises channel space state information and channel quality information;
or
the aperiodic feedback resource sending unit is specifically configured to: if the feedback content comprises channel space state information of the non-reference access point, send, according to the determination result of the feedback determining module, the channel adjustment information to the base station on all or a part of resources used to aperiodically feed back channel quality information of the non-reference access point and configured by the base station;
or
the aperiodic feedback resource sending unit is specifically configured to: if the feedback content comprises channel space state information of the non-reference access point, send, according to the determination result of the feedback determining module, the channel adjustment information to the base station on all or a part of resources used to aperiodically feed back the channel space state information of the non-reference access point and configured by the base station.

31. The terminal according to claim 29, wherein
the periodic feedback resource sending unit is specifically configured to: if the feedback content does not comprise channel state information of the non-reference access point, send, according to the determination result of the feedback determining module, the channel adjustment information to the base station on all or a part of resources used to periodically feed back the channel state information of the non-reference access point and configured by the base station, wherein the channel state information comprises channel space state information and channel quality information;
or
the periodic feedback resource sending unit is specifically configured to: if the feedback content comprises channel space state information of the non-reference access point, send, according to the determination result of the feedback determining module, the channel adjustment information to the base station on all or a part of resources used to periodically feed back channel quality information of the non-reference access point and configured by the base station;
or
the periodic feedback resource sending unit is specifically configured to: if the feedback content comprises channel quality information of the non-reference access point, send, according to the determination result of the feedback determining module, the channel adjustment information to the base station on all or a part of resources used to periodically feed back channel space state information of the non-reference access point and configured by the base station.

**32.** The terminal according to any one of claims 20 to 22, further comprising:

a quantization processing module, configured to perform quantization processing on the channel adjustment information before the feedback module sends the channel adjustment information, wherein a codebook, based on which the quantization processing module performs the quantization processing on the channel adjustment information, is predetermined, or is designated by the base station, and the codebook comprises one or more of the following constellation diagrams: a BPSK constellation diagram of 1 bit, a QPSK constellation diagram of 2 bits, an 8PSK constellation diagram of 3 bits, and a 16QAM constellation diagram of 4 bits, wherein the feedback module is specifically configured to send, according to the determination result of the feedback determining module, the channel adjustment information on which the quantization processing has been performed to the base station on the resource configured by the base station.

**33.** A base station, comprising:

a feedback instruction sending module, configured to send multi-access point feedback configuration signaling to a terminal; and
a feedback content receiving module, configured to receive, on a configured resource, feedback content that is sent by the terminal according to the multi-access point feedback configuration signaling sent by the feedback instruction sending module, wherein the feedback content comprises at least: channel adjustment information between a reference access point and a non-reference access point; and the configured resource comprises: a configured dedicated resource used to feed back the channel adjustment information, or all or a part of configured resources used for periodic feedback, or all or a part of configured resources used for aperiodic feedback.

**34.** The base station according to claim 33, further comprising:

a feedback subband indicating module, configured to, after the feedback instruction sending module sends the multi-access point feedback configuration signaling, send, to the terminal, signaling used to indicate a subband that needs to feed back the channel adjustment information.

**35.** The base station according to claim 34, wherein
the feedback subband indicating module is specifically configured to, after the feedback instruction sending module sends the multi-access point feedback configuration signaling, send high layer signaling to the terminal for indicating one or more subband groups, so that the terminal determines, according to a preset rule, a subband group that needs to feed back the channel adjustment information from the one or more subband groups, and determines the subband that needs to feed back the channel adjustment information and is indicated by the base station from the determined subband group;
or
the feedback subband indicating module is specifically configured to, after the feedback instruction sending module sends the multi-access point feedback configuration signaling, send high layer signaling to the terminal for indicating multiple subbands, send dynamic signaling to the terminal for indicating a subband group that needs to feed back the channel adjustment information among the multiple subbands, and determine the subband that needs to feed back the channel adjustment information and is indicated by the base station from a determined subband group.

**36.** The base station according to any one of claims 33 to 35, further comprising:

an inverse quantization processing module, configured to perform, based on a predetermined codebook, inverse quantization processing on the channel adjustment information received by the feedback content receiving module, wherein the codebook comprises one or more of the following constellation diagrams: a BPSK constellation diagram of 1 bit, a QPSK constellation diagram of 2 bits, an 8PSK constellation diagram of 3 bits, and a 16QAM constellation diagram of 4 bits.

Determine that channel information between access points needs to be fed back ⌐11

Send feedback content to a base station on a resource configured by the base station, where the feedback content includes at least: channel adjustment information between a reference access point and a non-reference access point; and the resource configured by the base station includes: a dedicated resource used to feed back the channel adjustment information and configured by the base station, or all or a part of resources used for periodic feedback and configured by the base station, or all or a part of resources used for aperiodic feedback and configured by the base station ⌐12

FIG. 1

Send multi-access point feedback configuration signaling to a terminal ⌐21

Receive, on a configured resource, feedback content that is sent by the terminal according to the multi-access point feedback configuration signaling, where the feedback content includes at least: channel adjustment information between a reference access point and a non-reference access point; and the configured resource includes: a configured dedicated resource used to feed back the channel adjustment information, or all or a part of configured resources used for periodic feedback, or all or a part of configured resources used for aperiodic feedback ⌐22

FIG. 2

| |
|---|
| PMI of the serving cell: $P_1$ |
| CSI of the coordinated cell: $V_2$ |
| Information between cells: $W_2$ |
| Large-scale power difference between cells: $D_2$ |

Serving cell

Coordinated cell

First cell

Second cell

$H_1$

$H_2$

UE

$$F = normalize\left(\begin{bmatrix} P_1^H & D_2 W_2^H V_2^H \end{bmatrix}^H\right)$$

FIG. 3

| | |
|---|---|
| A UE determines whether channel information between access points needs to be fed back. If needs, perform step 42; or if does not need, the UE may feed back channel space state information of a single access point by adopting an existing method, and the procedure ends | 41 |
| The UE determines feedback content that needs to be fed back, where the feedback content includes at least: channel adjustment information between a reference access point and a non-reference access point | 42 |
| The UE determines a first frequency domain granularity of the channel adjustment information that needs to be fed back | 43 |
| The UE sends the channel adjustment information corresponding to the first frequency domain granularity to a base station, and the base station receives the channel adjustment information sent by the UE | 44 |

FIG. 4

Terminal

Feedback module ⌒ 52

⌒ 55

Periodic feedback resource sending unit ⌒ 523

Aperiodic feedback resource sending unit ⌒ 522

Feedback determining module ⌒ 51

Dedicated resource sending unit ⌒ 521

Quantization processing module

⌒ 54

Subband group obtaining unit ⌒ 541

Granularity indication obtaining unit ⌒ 542

Granularity determining module ⌒ 53

Granularity indication obtaining module

FIG. 5

Base station

Feedback signaling
sending module — 61

Feedback content
receiving module — 62

Feedback subband
indicating module — 63

Inverse quantization
processing module — 64

FIG. 6

Terminal — 71

Base station — 72

FIG. 7

<div align="center">

## INTERNATIONAL SEARCH REPORT

</div>

| International application No. |
| --- |
| **PCT/CN2012/078350** |

### A. CLASSIFICATION OF SUBJECT MATTER

<div align="center">

H04L 1/06(2006.01)i

</div>

According to International Patent Classification (IPC) or to both national classification and IPC

### B. FIELDS SEARCHED

Minimum documentation searched (classification system followed by classification symbols)

<div align="center">

IPC:H04B,H04L,H04Q,H04W

</div>

Documentation searched other than minimum documentation to the extent that such documents are included in the fields searched

Electronic data base consulted during the international search (name of data base and, where practicable, search terms used)

WPI;EPODOC;CNKI;CNPAT：CoMP，coordinat+，mult+，point，transmission，estimat+，LTE，channel，AP，access 2d point，BS，basestation，nodeB，feedback，feed 2d back，phase，amplitude，shift

### C. DOCUMENTS CONSIDERED TO BE RELEVANT

| Category* | Citation of document, with indication, where appropriate, of the relevant passages | Relevant to claim No. |
| --- | --- | --- |
| Y | CN102056220A(HUAWEI TECHNOLOGIES CO., LTD.) 11 May 2011(11.05.2011) description paragraphs[0054]-[0055] | 1-4、14-16、19-22、29、32、33、36 |
| Y | CN101753185A(DATANG MOBILE COMMUNICATIONS EQUIPMENT CO., LTD.) 23 Jun.2010(23.06.2010) description paragraphs[0054]-[0060] and abstract | 1-4、14-16、19-22、29、32、33、36 |
| A | CN101917381A(XIDIAN UNIVERSITY) 15 Dec.2010(15.12.2010) the whole document | 1-36 |
| A | CN102111352A(ZTE CORPORATION) 29 Jun.2011(29.06.2011) the whole document | 1-36 |
| A | WO2011/022733A2(QUALCOMM INCORPORATED) 24 Feb.2011(24.02.2011) the whole document | 1-36 |

| ☐ Further documents are listed in the continuation of Box C. | ☒ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
| --- | --- |
| 16 Sep.2012(16.09.2012) | 18 Oct.2012(18.10.2012) |

| Name and mailing address of the ISA State Intellectual Property Office of the P. R. China No. 6, Xitucheng Road, Jimenqiao Haidian District, Beijing 100088, China Facsimile No. (86-10)62019451 | Authorized officer XU, Quan Telephone No. (86-10)62413312 |
| --- | --- |

Form PCT/ISA /210 (second sheet) (July 2009)

# INTERNATIONAL SEARCH REPORT
## Information on patent family members

International application No.

**PCT/CN2012/078350**

| Patent Documents referred in the Report | Publication Date | Patent Family | Publication Date |
|---|---|---|---|
| CN 102056220 A | 11.05.2011 | WO 2011050727 A1 | 05.05.2011 |
| | | US 2012213113 A1 | 23.08.2012 |
| | | EP 2496008 A1 | 05.09.2012 |
| CN 101753185 A | 23.06.2010 | None | |
| CN 101917381 A | 15.12.2010 | None | |
| CN 102111352 A | 29.06.2011 | WO 2011076031 A1 | 30.06.2011 |
| WO 2011022733 A2 | 24.02.2011 | TW 201119470 A1 | 01.06.2011 |
| | | US 2011237272 A1 | 29.09.2011 |
| | | CN 102484551 A | 30.05.2012 |
| | | KR 20120062809 A | 14.06.2012 |
| | | EP 2467957 A2 | 27.06.2012 |

Form PCT/ISA /210 (patent family annex) (July 2009)

**EP 2 713 540 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201110189916